# EUROPEAN PATENT SPECIFICATION

(11) **EP 3 040 955 B1**
(45) Date of publication and mention of the grant of the patent: **04.09.2019**
(21) Application number: 15195062.3
(22) Date of filing: 18.11.2015
(51) Int. Cl.: G08B 13/196, G08B 25/00

(54) **VIDEO MONITORING METHOD AND DEVICE**
VIDEOÜBERWACHUNGSVERFAHREN UND VORRICHTUNG
PROCÉDÉ ET DISPOSITIF DE SURVEILLANCE VIDÉO

(30) Priority: 31.12.2014 CN 201410852301
(43) Date of publication of application: 06.07.2016
(73) Proprietor: Xiaomi Inc., Beijing 100085 (CN)
(72) Inventor: ZHANG, Pengfei, 100085 BEIJING (CN); XIA, Yongfeng, 100085 BEIJING (CN); QU, Heng, 100085 BEIJING (CN); LIU, Tiejun, 100085 BEIJING (CN)
(74) Representative: Perrot, Emilie

(56) References cited:
- WO-A2-01/08116
- WO-A2-2007/038184
- WO-A2-2014/144628
- ES-A1- 2 255 886
- US-B2- 7 411 497

## Description

### TECHNICAL FIELD

The present invention generally relates to the field of a smart device, and more particularly, to a video monitoring method and a device thereof.

### BACKGROUND

As a smart device which has a meteoric rise, a smart camera is widely used for residential monitoring (or residential surveillance).

When a user uses a smart camera to monitor his/her dwelling, the user only needs to turn on the smart camera, which is automatically connected to a router and then uploads videos it recorded to a server via the router. The user may monitor his/her dwelling by acquiring videos from the server by means of a smart mobile phone even though the user is out.

It is found that in the process of implementing the present invention, the above method has at least following defects: once the smart camera is turned on it will upload videos recorded to a server even though users are at home, thus leading to disclosure of user privacy.

Document US 7 411 497 B2 discloses systems and methods for detecting presence and movement of intruders.

### SUMMARY

In order to solve the problem in related technologies that once a smart camera is turned on it will upload videos recorded to a server even though users are at home (thus leading to disclosure of user privacy), the embodiments of the present invention provide a video monitoring method and a device thereof, and the technical solutions are as below.

According to the first aspect, the invention relates to a video monitoring method implemented by a monitoring equipment, the method comprising:
receiving a wireless signal sent from an external device;
detecting whether the intensity of the wireless signal is greater than a threshold value;
detecting whether a device identification carried in the wireless signal is the same as that of a wearable device if the intensity of the wireless signal is greater than the threshold value;
stopping video monitoring if the device identification is the same as that of the wearable device; and
after stopping video monitoring, continuing detecting the intensity of the wireless signal received, and conducting video monitoring again if it is detected that the intensity of the wireless signal is smaller than the threshold value.

In one exemplary embodiment, the method further comprises:
continuing conducting a video monitoring if it is detected that the device identification is different from that of the wearable device;
or,
continuing conducting a video monitoring if it is detected that the intensity of the wireless signal is smaller than the threshold value.

In one exemplary embodiment, the method further comprises:
establishing a binding relationship with the wearable device in advance.

In one exemplary embodiment, the step of establishing a binding relationship with the wearable device in advance comprises:
sending a device identification of a monitoring equipment to a server, the server being configured to look up a device identification of a wearable device binding the same user account as the monitoring equipment according to the device identification of the monitoring equipment;
receiving the device identification of the wearable device sent from the server; and
storing the device identification of the wearable device as the device identification of the wearable device.

In one exemplary embodiment, the step of establishing a binding relationship with the wearable device in advance comprises:
receiving binding information sent from a mobile terminal, the binding information including device identifications of at least one wearable device, and the binding information being sent from the mobile terminal according to a setup operation received at a binding relationship setup interface; and
storing the device identification of the wearable device as the device identification of the wearable device.

According to a second aspect, the invention relates to a video monitoring device, the device comprising:
a signal receiving module, configured to receive a wireless signal sent from an external device;
an identification detecting module comprising a threshold value detecting submodule configured to detect whether the intensity of the wireless signal received by the signal receiving module is greater than a threshold value,
   wherein the identification detecting module is configured to detect whether the device identification carried in the wireless signal received by the signal receiving module is the same as that of the wearable device if the threshold value detecting submodule detects that the intensity of the wireless signal is greater than the threshold value;
a stop monitoring module, configured to stop video monitoring if the identification detecting module detects that the device identification is the same as that of the wearable device; and the video monitoring device configured to after stopping video monitoring continue detecting the intensity of the wireless signal received, and conduct video monitoring again if the identification detecting module detects that the intensity of the wireless signal is smaller than the threshold value.

In one exemplary embodiment, the device further comprises:
a first monitoring module, configured to continue conducting a video monitoring if the identification detecting module detects that the device identification is different from that of the wearable device;
or,
a second monitoring module, configured to continue conducting a video monitoring if the identification detecting module detects that the intensity of the wireless signal is smaller than the threshold value.

In one exemplary embodiment, the device further comprises:
a binding establishment module, configured to establish a binding relationship with the wearable device in advance.

In one exemplary embodiment, the binding establishment module comprises:
an identification sending submodule, configured to send a device identification of a monitoring equipment to a server, the server being configured to look up the device identification of a wearable device binding the same user account as the monitoring equipment according to the device identification of the monitoring equipment;
an identification receiving submodule, configured to receive the device identification of the wearable device sent from the server; and
a first storage submodule, configured to store the device identification of the wearable device received by the identification receiving submodule as the device identification of the wearable device.

In one exemplary embodiment, the binding establishment module comprises:
an information receiving submodule, configured to receive binding information sent from a mobile terminal, the binding information comprising device identifications of at least one wearable device, and the binding information being sent from the mobile terminal according to a setup operation received at a binding relationship setup interface; and
a second storage submodule, configured to store the device identification of the wearable device received by the information receiving submodule as the device identification of the wearable device.

In a particular embodiment, the steps of the video monitoring method are determined by computer program instructions.

Consequently, according to a fourth aspect, the invention is also directed to a computer program for executing the steps of a video monitoring method as described above when this program is executed by a computer.

This program can use any programming language and take the form of source code, object code or a code intermediate between source code and object code, such as a partially compiled form, or any other desirable form.

The invention is also directed to a computer-readable recording medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to the embodiments of the present invention may have the following beneficial effects:
By receiving a wireless signal sent from the external device, detecting whether the device identification carried in the wireless signal is the same as that of the wearable device, and stopping video monitoring if the device identification is the same as that of the wearable device, the present invention solves the problem that as long as the monitoring equipment is turned on it will continuously upload videos recorded to the server even though users are at home (thus leading to disclosure of user privacy), and achieves the effect of protecting user privacy by automatically stopping video monitoring when the monitoring equipment detects that the wearable device is nearby.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a video monitoring method according to an exemplary embodiment.
Fig. 2A is a flow chart showing a video monitoring method according to another exemplary embodiment.
Fig. 2B is a schematic diagram showing implementation of a video monitoring method according to another exemplary embodiment.
Fig. 2C is a flow chart showing a binding process involved in a video monitoring method according to another exemplary embodiment.
Fig. 2D is a schematic diagram showing implementation of a video monitoring method according to another exemplary embodiment.
Fig. 2E is a flow chart showing a binding process involved in a video monitoring method according to another exemplary embodiment.
Fig. 2F is a schematic diagram showing implementation of a video monitoring method according to another exemplary embodiment.
Fig. 3 is a structural block diagram of a video monitoring device according to an exemplary embodiment.
Fig. 4 is a structural block diagram of a video monitoring device according to another exemplary embodiment.
Fig. 5 is a block diagram of a video monitoring device according to an exemplary embodiment.

Specific embodiments of the present invention are shown by the above drawings, and more detailed description will be made hereinafter. These drawings and text description are not for limiting the scope of conceiving the present invention in any way, but for illustrating the concept of the present invention for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The video monitoring method provided in embodiments of the invention may be performed by a monitoring equipment with video monitoring function, for example, the monitoring equipment may be a wired or wireless smart camera with computing and processing capability.

For a simplified description, hereinafter it is illustrated by an example in which the video monitoring method is only performed by a monitoring equipment, which is not limited herein.

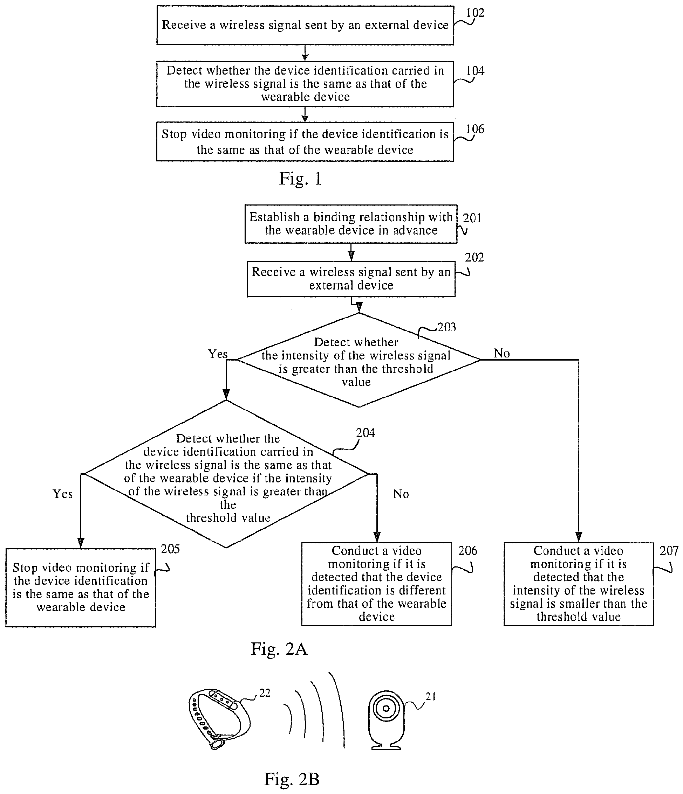

Fig. 1 is a flow chart showing a video monitoring method according to an exemplary embodiment which is illustrated by applying the video monitoring method into a monitoring equipment. The video monitoring method may include following steps.
In Step 102, a wireless signal sent from an external device is received;
in Step 104, it is detected whether a device identification carried in the wireless signal is the same as that of a wearable device; and
in Step 106, video monitoring is stopped if the device identification is the same as that of the wearable device.

In conclusion, by receiving a wireless signal sent from the external device, detecting whether the device identification carried in the wireless signal is the same as that of the wearable device, and stopping video monitoring if the device identification is the same as that of the wearable device, the video monitoring method provided in the exemplary embodiment solves the problem that as long as the monitoring equipment is turned on it will continuously upload videos recorded to a server even though users are at home (thus leading to disclosure of user privacy), and achieves the effect of protecting user privacy by automatically stopping video monitoring when the monitoring equipment detects that the wearable device is nearby.

For implementation of the above method, a binding relationship is established between the monitoring equipment and the wearable device in advance so that after receiving a wireless signal sent from the external device the monitoring equipment may judge whether the external device is the wearable device and conducts or stops monitoring according to judged results. Reference will now be made by adopting an exemplary embodiment.

Fig. 2A is a flow chart showing a video monitoring method according to another exemplary embodiment which is illustrated by applying the video monitoring method into a monitoring equipment. The video monitoring method may include following steps.

In Step 201, a binding relationship is established with a wearable device in advance.

The wearable device is an electronic device which is able to transmit motion data and device information acquired by means of a wireless signal such as a Bluetooth signal or an infrared signal, etc. The wearable device may be a smart wristband, a smart watch, a smart bracelet, a smart necklace, a smart finger ring or smart glasses.

A user establishes in advance a binding relationship between the monitoring equipment and the wearable device so that the monitoring equipment may judge whether an external device sending a wireless signal is the wearable device according to the wireless signal received.

In Step 202, the wireless signal sent from the external device is received.

After startup, the monitoring equipment may receive the wireless signal sent from the external device. The wireless signal may be a Bluetooth signal or an infrared signal, etc.

For example, the monitoring equipment is provided with a Bluetooth module, which is simultaneously turned on for receiving a Bluetooth signal sent from the external device when the video monitoring function of the monitoring equipment is started.

In Step 203, it is detected whether the intensity of the wireless signal is greater than a threshold value.

The monitoring equipment detects the intensity of the wireless signal received and judges whether the external device is within the scope of monitoring according to the intensity of the wireless signal. The size of the threshold value depends on the monitoring scope of the monitoring equipment. The monitoring equipment may compare the intensity of the wireless signal received with the preset threshold value. If the intensity is greater than the threshold value, the monitoring equipment determines that the external device is within the scope of monitoring and Step 204 is performed. If the intensity is smaller than the threshold value, the monitoring equipment determines that the external device is not within the scope of monitoring and Step 207 is performed.

It should be explained that Step 203 is an optional step. That is to say, the step of detecting the intensity of the wireless signal can be skipped and Step 204 can be directly performed after the monitoring equipment receives the wireless signal sent from the external device.

In Step 204, it is detected whether a device identification carried in the wireless signal is the same as that of the wearable device if the intensity of the wireless signal is greater than the threshold value.

If the intensity of the wireless signal is greater than the threshold value, the monitoring equipment may resolve (or parse) the wireless signal received and acquire the device identification of the external device carried in the wireless signal.

For example, if the wireless signal is a Bluetooth signal, the monitoring equipment may resolve the Bluetooth signal received and acquire a digital signal, and extract from the digital signal the device identification of the external device. The device identification may be the MAC (Media Access Control) address of the Bluetooth module in the external device.

After acquiring the device identification of the external device, the monitoring equipment may detect whether the device identification is consistent with a device identification prestored in the wearable device. If the device identification is consistent with the device identification prestored in the wearable device, the monitoring equipment determines the external device as the wearable device, and Step 205 is performed. Otherwise, the monitoring equipment determines the external device is not the wearable device, and Step 206 is performed.

In Step 205, video monitoring is stopped if the device identification is the same as that of the wearable device.

If the device identification of the external device is the same as that of the wearable device, the monitoring equipment determines that the user carrying the wearable device is within the scope of monitoring, and the monitoring equipment will stop video monitoring.

For example, as shown in Fig. 2B, taking an example in which the wearable device is a smart wristband, a binding relationship is established in advance between the monitoring equipment 21 and the smart wristband 22, and a Bluetooth signal carrying the device identification is continuously sent out. The monitoring equipment 21 detects the intensity of the Bluetooth signal sent from the smart wristband 22, and when it detects that the intensity is greater than the threshold value, it resolves the Bluetooth signal and acquires the device identification carried in the Bluetooth signal. As the device identification of the smart wristband 22 is prestored, the monitoring equipment 21 may determine that the user carrying the wearable device bound in advance is within the scope of monitoring, and the monitoring equipment 21 will stop video monitoring.

It should be explained that after stopping video monitoring, the monitoring equipment will continue detecting the intensity of the wireless signal received. When the intensity is smaller than the threshold value, the monitoring equipment may immediately know that the external device is out of the scope of monitoring and conduct video monitoring again.

In Step 206, a video monitoring is conducted if it is detected that the device identification is different from that of the wearable device.

If the device identification of the external device is different from that of the wearable device, the monitoring equipment may determine that the external device is not the wearable device, continue conducting a video monitoring, record videos and upload videos recorded to a server or save videos recorded in a storage device.

In Step 207, a video monitoring is conducted if it is detected that the intensity of the wireless signal is smaller than the threshold value.

When the intensity of the wireless signal received is smaller than the threshold value, the monitoring equipment may immediately know that the external device is out of the scope of monitoring and continue conducting a video monitoring.

In conclusion, by receiving a wireless signal sent from the external device, detecting whether the device identification carried in the wireless signal is the same as that of the wearable device, and stopping video monitoring if the device identification is the same as that of the wearable device, the video monitoring method provided in the exemplary embodiment solves the problem that as long as the monitoring equipment is turned on it will continuously upload videos recorded to a server even though users are at home (thus leading to disclosure of user privacy), and achieves the effect of protecting user privacy by automatically stopping video monitoring when the monitoring equipment detects that the wearable device is nearby.

In the exemplary embodiment, the monitoring equipment detects the intensity of the wireless signal sent from the external device. When the intensity of the wireless signal is smaller than the threshold value, the monitoring equipment may immediately know that the external device is out of the scope of monitoring and continue conducting a video monitoring. When the intensity of the wireless signal is greater than the threshold value, the monitoring equipment may detect the device identification carried in the wireless signal and determine whether or not to conduct a video monitoring according to detection results, thus solving the problem that when the monitoring equipment detects the wearable device, the monitoring equipment may stop video monitoring even though the wearable device is out of the scope of monitoring.

In the video monitoring method provided in the above embodiment, Step 201 may include the two following possible implementation modes.

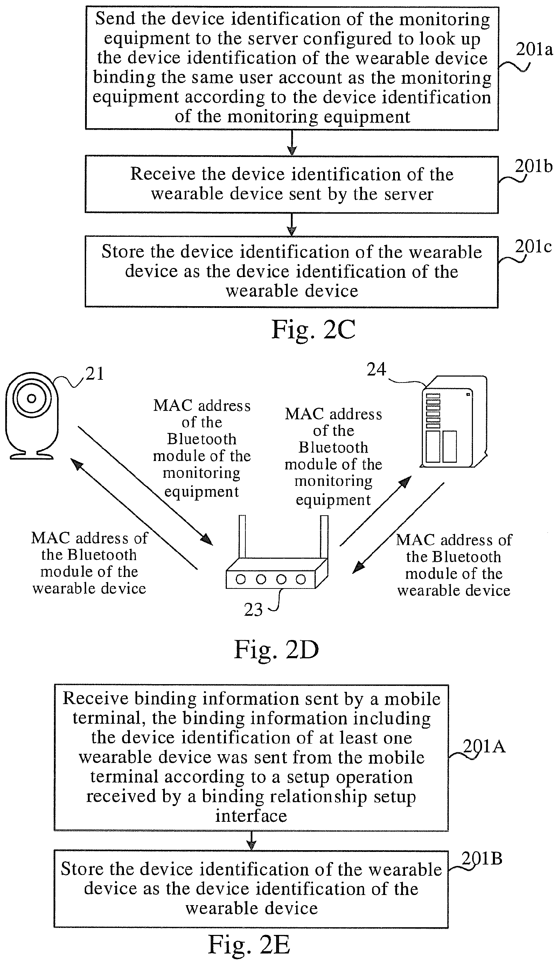

In the first possible implementation mode, as shown in Fig. 2C, Step 201 may include Step 201a and Step 201c.

In Step 201a, the monitoring equipment sends the device identification of the monitoring equipment to the server, which will look up a device identification of a wearable device binding the same user account as the monitoring equipment according to the device identification of the monitoring equipment.

The monitoring equipment sends the device identification of the monitoring equipment to the server, and the device identification may be the MAC address of the Bluetooth module in the monitoring equipment. On the basis of the device identification sent from the monitoring equipment, the server may look up account information about the user binding the monitoring equipment from a table in which the binding relationship between the monitoring equipment and user account is prestored. Taking an example in which the device identification of the monitoring equipment is the MAC address of the Bluetooth module, the structure of the table of the binding relationship between the monitoring equipment and the user account may be as shown in Table I.

**Table I**

| Device identification of a monitoring equipment | User account |
|---|---|
| 00:11:22:33:AA:BB | Zhangsan |
| 00:11:22:33:AA:BC | Lisi |
| 00:11:22:33:AA:BD | Wangwu |

The server may look up the corresponding user account according to the device identification of the monitoring equipment, and look up the device identification of the wearable device according to the user account information. The device identification of the wearable device may be the MAC address of the Bluetooth module in the wearable device. The table of the binding relationship between the wearable device and user account may be stored in the server, the table structure of which may be as shown in Table II.

**Table II**

| Device identification of the wearable device | User account |
|---|---|
| 00:11:22:33:AA:CC | Zhangsan |
| 00:11:22:33:AA:CD | Lisi |
| 00:11:22:33:AA:CE | Wangwu |

For example, if the device identification of the monitoring equipment sent from the monitoring equipment to the server is "00:11:22:33:AA:BB", the server may look up the device identification ("00:11:22:33:AA:CC") of the wearable device binding the same user account as the monitoring equipment.

It should be explained that the same user account may be bound with a plurality of wearable devices or a plurality of monitoring equipment, on which the present invention makes no restriction.

In Step 201b, the monitoring equipment receives the device identification of the wearable device sent from the server.

After looking up the device identification of the wearable device, the server sends the device identification of the wearable device to the monitoring equipment. Correspondingly, the monitoring equipment receives the device identification of the wearable device.

For example, as shown in Fig. 2D, the monitoring equipment 21 sends the MAC address of the Bluetooth module in the monitoring equipment 21 to the server 24 via a connected router 23. The server 24 looks up the MAC address of the Bluetooth module in the wearable device binding the same user account as the monitoring equipment 21 according to the MAC address of the Bluetooth module in the monitoring equipment, and sends the MAC address of the Bluetooth module of the wearable device to the monitoring equipment 21.

In Step 201c, the monitoring equipment stores the device identification of the wearable device as the device identification of the wearable device.

The monitoring equipment determines and stores the received device identification of the wearable device as the device identification of the wearable device.

In the second possible implementation mode, as shown in Fig. 2E, Step 201 may include Step 201A and Step 201B.

In Step 201A, the monitoring equipment receives binding information sent from a mobile terminal, the binding information including device identifications of at least one wearable device, and the binding information was sent from the mobile terminal according to a setup operation received at a binding relationship setup interface.

The mobile terminal may be connected to the monitoring equipment by Bluetooth, and may receive the device identification of the wearable device inputted by the user on the binding relationship setup interface and send device identification of the wearable device to the monitoring equipment. Correspondingly, the monitoring equipment receives the device identification of the wearable device.

In Step 201B, the monitoring equipment stores the device identification of the wearable device as the device identification of the wearable device.

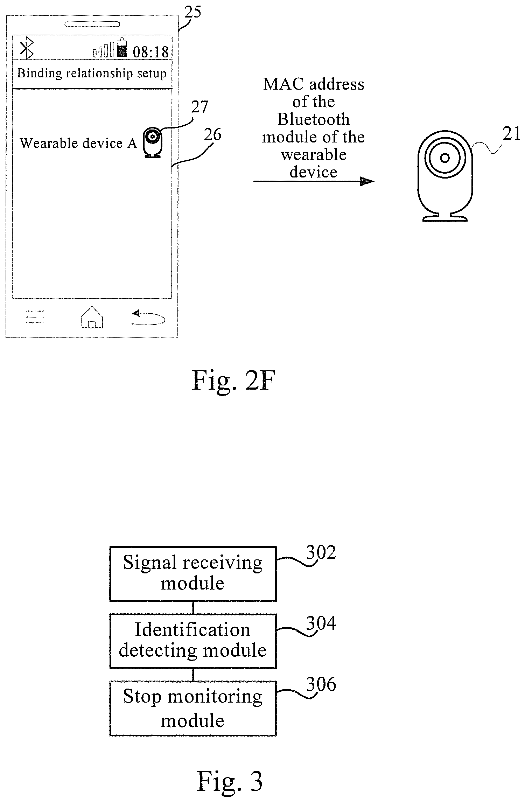

For example, as shown in Fig. 2F, the user may run monitoring equipment management software installed in the mobile terminal 25 and establish Bluetooth connection with the monitoring equipment 21. After acquiring the MAC address of the Bluetooth module in the wearable device, the mobile terminal 25 displays a camera icon 27 on the binding relationship setup interface 26 for the user to choose, and sends the MAC address of the Bluetooth module to the monitoring equipment 21 according to the user's choice. The monitoring equipment 21 determines the MAC address of the Bluetooth module as the device identification of the wearable device.

It should be explained that the user may also log onto the monitoring equipment management software by virtue of the user account. After searching out the monitoring equipment, the device identification of the wearable device binding with the user account is automatically sent to the monitoring equipment, which receives and stores the device identification of the wearable device.

The following is the embodiment of a device of the present invention, which may be configured to carry out the embodiment of the method of the present invention. Please refer to the embodiment of the method of the present invention with regard to undisclosed details about the embodiment of the device of the present invention.

Fig. 3 is a structural block diagram of a video monitoring device according to an exemplary embodiment; the video monitoring device may be realized by means of software and hardware or combination of both to become the monitoring equipment in part or in whole. The video monitoring device may include:
a signal receiving module 302, configured to receive a wireless signal sent from an external device;
an identification detecting module 304, configured to detect whether a device identification carried in the wireless signal received by the signal receiving module 302 is the same as that of a wearable device; and
a stop monitoring module 306, configured to stop video monitoring if the identification detecting module 304 detects that the device identification is the same as that of the wearable device.

In conclusion, by receiving a wireless signal sent from the external device, detecting whether the device identification carried in the wireless signal is the same as that of the wearable device, and stopping video monitoring if the device identification is the same as that of the wearable device, the video monitoring device provided in the exemplary embodiment solves the problem that as long as the monitoring equipment is turned on it will continuously upload videos recorded to a server even though users are at home (thus leading to disclosure of user privacy), and achieves the effect of protecting user privacy by automatically stopping video monitoring when the monitoring equipment detects that the wearable device is nearby.

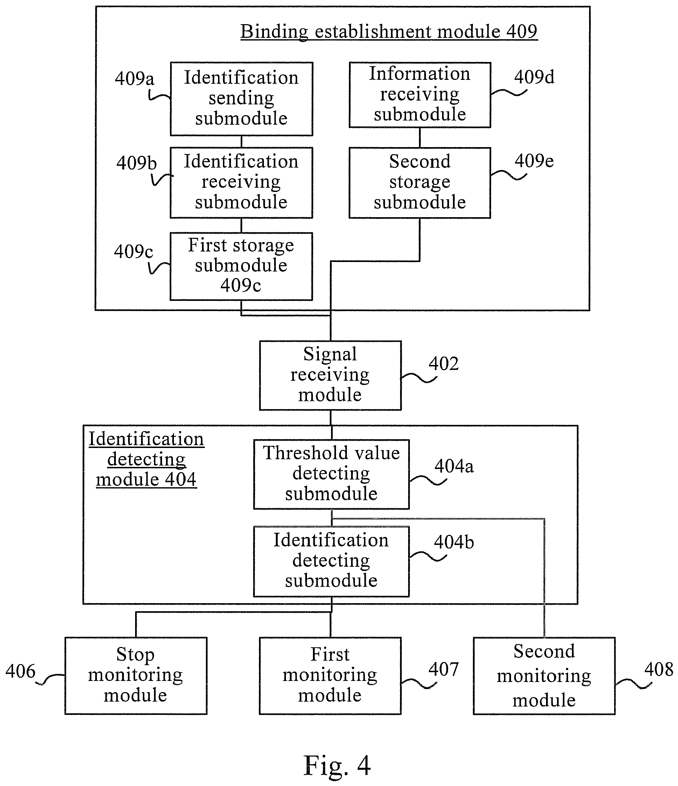

Fig. 4 is a structural block diagram of a video monitoring device according to another exemplary embodiment; the video monitoring device may be realized by means of software and hardware or combination of both to become the monitoring equipment in part or in whole. The video monitoring device may include:
a signal receiving module 402, configured to receive a wireless signal sent from an external device;
an identification detecting module 404, configured to detect whether a device identification carried in the wireless signal received by the signal receiving module 402 is the same as that of the wearable device; and
a stop monitoring module 406, configured to stop video monitoring if the identification detecting module 404 detects that the device identification is the same as that of the wearable device.

Optionally, the identification detecting module 404 includes:
a threshold value detecting submodule 404a, configured to detect whether the intensity of the wireless signal received by the signal receiving module is greater than a threshold value; and
an identification detecting submodule 404b, configured to detect whether the device identification carried in the wireless signal is the same as that of the wearable device if the threshold value detecting submodule detects that the intensity of the wireless signal is greater than the threshold value.

Optionally, the device also includes:
a first monitoring module 407, configured to conduct a video monitoring if the identification detecting module 404 detects that the device identification is different from that of the wearable device;
or,
a second monitoring module 408, configured to conduct a video monitoring if the identification detecting module 404 detects that the intensity of the wireless signal is smaller than the threshold value.

Optionally, the device also includes:
a binding establishment module 409, configured to establish a binding relationship with the wearable device in advance.

Optionally, the binding establishment module 409 includes:
an identification sending submodule 409a, configured to send the device identification of the monitoring equipment to the server, the server being configured to look up the device identification of the wearable device binding the same user account as the monitoring equipment according to the device identification of the monitoring equipment;
an identification receiving submodule 409b, configured to receive the device identification of the wearable device sent from the server; and
a first storage submodule 409c, configured to store the device identification of the wearable device received by the identification receiving submodule 409b as the device identification of the wearable device.

Optionally, the binding establishment module 409 includes:
an information receiving submodule 409d, configured to receive binding information sent from a mobile terminal, the binding information including device identifications of at least one wearable device, the binding information being sent from the mobile terminal according to a setup operation received at a binding relationship setup interface; and
a second storage submodule 409e, configured to store the device identification of the wearable device received by the information receiving submodule 409d as the device identification of the wearable device.

In conclusion, by receiving a wireless signal sent from the external device, detecting whether the device identification carried in the wireless signal is the same as that of the wearable device, and stopping video monitoring if the device identification is the same as that of the wearable device, the video monitoring device provided in the exemplary embodiment solves the problem that as long as the monitoring equipment is turned on it will continuously upload videos recorded to a server even though users are at home (thus leading to disclosure of user privacy), and achieves the effect of protecting user privacy by automatically stopping video monitoring when the monitoring equipment detects that the wearable device is nearby.

In the exemplary embodiment, the monitoring equipment detects the intensity of the wireless signal sent from the external device. When the intensity of the wireless signal is smaller than the threshold value, the monitoring equipment may immediately know that the external device is out of the scope of monitoring and continue conducting a video monitoring. When the intensity of the wireless signal is greater than the threshold value, the monitoring equipment may detect the device identification carried in the wireless signal and determine whether or not to conduct a video monitoring according to detection results, thus solving the problem that when the monitoring equipment detects the wearable device, the monitoring equipment may stop video monitoring even though the wearable device is out of the scope of monitoring.

With regard to the device in the above embodiment, detailed description of specific modes for conducting operation of modules has been made in the embodiment related to the method, no detailed illustration will be made herein.

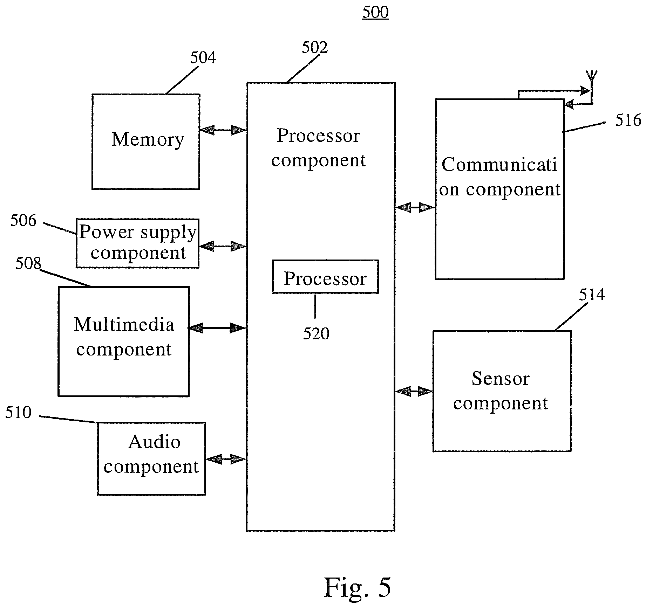

Fig. 5 is a block diagram of a video monitoring device according to an exemplary embodiment. For example, the video monitoring device 500 may be a smart camera with computing and processing capability.

Referring to Fig. 5, the video monitoring device 500 may include one or more components as below: a processor component 502, a memory 504, a power supply component 506, a multimedia component 508, an audio component 510, a sensor component 514 and a communication component 516.

The processor module 502 usually controls the overall operation of the device 500, such as operation associated with video monitoring. The processor component 502 may include one or more processors 520 for executing instructions so as to complete steps of the above method in part or in whole. In addition, the processor component 502 may include one or more modules for the convenience of interaction between the processor component 502 and other components.

The memory 504 is configured to store data of different types so as to support the operation of the device 500. Examples of the data include any application program or approach directive for operation of the device 500. The memory 504 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 506 provides power for components of the device 500. The power supply component 506 may include a power management system, one or more power supplies, and other components associated with generation, management and power distribution of the device 500.

The multimedia component 508 includes at least one camera. When the device 500 is under a capture mode or video mode, the camera may receive external multimedia data. The camera may be a fixed optical lens system or have focal length and optical zoom capacity.

The audio component 510 is configured to output and/or input audio signal. For example, the audio component 510 includes a microphone (MIC) and is configured to receive external audio signal. The audio signal received may be further stored in the memory 504 or sent out by the communication component 516. In some embodiments, the audio component 510 also includes a loudspeaker for outputting audio signal.

The sensor component 514 includes one or more sensors for providing the device 500 with state evaluation from all aspects. The sensor component 514 also may detect the position change of the device 500 or of a component thereof, the presence or absence of users' touch on the device 500, the direction or acceleration/deceleration of the device 500, and temperature variation of the device 500. The sensor component 514 may also include a proximity detector, which is configured to detect the presence of nearby objects in case of no physical touch. The sensor component 514 may also include an optical sensor, for example, CMOS or CCD image sensor for imaging. In some embodiments, the sensor component 514 may also include an acceleration sensor, a gyro sensor, a magnetic sensor, a pressure sensor, or a temperature sensor.

The communication component 516 is configured to facilitate wired communication or wireless communication between the device 500 and other equipment. The device 500 is available for access to wireless network based on communication standards, such as WiFi. In an exemplary embodiment, the communication component 516 receives by means of a broadcast channel the broadcast signal or broadcast-related information from external broadcast management systems. In an exemplary embodiment, the communication component 516 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, a non-transitory computer-readable storage medium including instructions is also provided, for example, a memory 504 including instructions, above instructions may be performed by the processors 518 of the device 500 so as to achieve the video monitoring method in which the monitoring equipment serves as the executive body. For example, the non-transitory computer-readable storage medium may be ROM, random access memory (RAM), CD-ROM, a magnetic tape, a floppy disk and an optical data storage device, etc.

## Claims

1. A video monitoring method implemented by a monitoring equipment, comprising:
receiving (102, 202) a wireless signal sent from an external device;
detecting (203) whether the intensity of the wireless signal is greater than a threshold value;
detecting (204) whether a device identification carried in the wireless signal is the same as that of a wearable device if the intensity of the wireless signal is greater than the threshold value; and
stopping (106, 205) video monitoring if the device identification is the same as that of the wearable device,
after stopping video monitoring, continuing detecting the intensity of the wireless signal received, and conducting video monitoring again if it is detected that the intensity of the wireless signal is smaller than the threshold value.

2. The method according to claim 1, wherein the method further comprises:
continuing conducting (206) a video monitoring if it is detected that the device identification is different from that of the wearable device or,
continuing conducting (207) a video monitoring if it is detected that the intensity of the wireless signal is smaller than the threshold value.

3. The method according to any one of claims 1 to 2, wherein the method further comprises:
establishing (201) a binding relationship with the wearable device in advance.

4. The method according to claim 3, wherein the step of establishing (201) a binding relationship with the wearable device in advance comprises:
sending (201a) a device identification of a monitoring equipment to a server, the server being configured to look up a device identification of a wearable device which binds the same user account as the monitoring equipment according to the device identification of the monitoring equipment;
receiving (201b) the device identification of the wearable device sent from the server; and
storing (201c) the device identification of the wearable device as the device identification of the wearable device.

5. The method according to claim 3, wherein the step of establishing (201) a binding relationship with the wearable device in advance comprises:
receiving (201A) binding information sent from a mobile terminal, the binding information comprising device identifications of at least one wearable device, and the binding information being sent from the mobile terminal according to a setup operation received at a binding relationship setup interface; and
storing (201B) the device identification of the wearable device as the device identification of the wearable device.

6. A video monitoring device, **characterized in that** the video monitoring device comprises:
a signal receiving module (302, 402), configured to receive a wireless signal sent from an external device;
an identification detecting module (304, 404) comprising a threshold value detecting submodule (404a) configured to detect whether the intensity of the wireless signal received by the signal receiving module (402) is greater than a threshold value,
wherein the identification detecting module (304, 404) is configured to detect whether the device identification carried in the wireless signal received by the signal receiving module (302, 402) is the same as that of a wearable device if the threshold value detecting submodule (404a) detects that the intensity of the wireless signal is greater than the threshold value; and
a stop monitoring module (306, 406), configured to stop video monitoring if the identification detecting module (304, 404) detects that the device identification is the same as that of the wearable device; the video monitoring device configured to after stopping video monitoring continue detecting the intensity of the wireless signal received, and conduct video monitoring again if the identification detecting module detects that the intensity of the wireless signal is smaller than the threshold value.

7. The device according to claim 6, wherein the device further comprises:
a first monitoring module (407), configured to continue conducting a video monitoring if the identification detecting module (404) detects that the device identification is different from that of the wearable device;
or,
a second monitoring module (408), configured to continue conducting a video monitoring if the identification detecting module (404) detects that the intensity of the wireless signal is smaller than the threshold value.

8. The device according to any one of claims 6 to 7, wherein the device further comprises:
a binding establishment module (409), configured to establish a binding relationship with the wearable device in advance.

9. The device according to claim 8, wherein the binding establishment module (409) comprises:
an identification sending submodule (409a), configured to send a device identification of a monitoring equipment to a server, the server being configured to look up a device identification of a wearable device binding the same user account as the monitoring equipment according to the device identification of the monitoring equipment;
an identification receiving submodule (409b), configured to receive the device identification of the wearable device sent from the server; and
a first storage submodule (409c), configured to store the device identification of the wearable device received by the identification receiving submodule (409b) as the device identification of the wearable device.

10. The device according to claim 8, wherein the binding establishment module (409) comprises:
an information receiving submodule (409d), configured to receive binding information sent from a mobile terminal, the binding information comprising device identifications of at least one wearable device, and the binding information being sent from the mobile terminal according to a setup operation received at a binding relationship setup interface; and
a second storage submodule (409e), configured to store a device identification of the wearable device received by the information receiving submodule (409d) as the device identification of the wearable device.

11. A computer program including instructions for executing the steps of a video monitoring method according to any one of claims 1 to 5 when said program is executed by a computer.

12. A recording medium readable by a computer and having recorded thereon a computer program including instructions for executing the steps of a video monitoring method according to claims 1 to 5.

## Patentansprüche

1. Videoüberwachungsverfahren, das von einer Überwachungseinrichtung umgesetzt wird, umfassend:
Empfangen (102, 202) eines drahtlosen Signals, das von einer externen Vorrichtung gesendet wird,
Detektieren (203), ob die Stärke des drahtlosen Signals über einem Schwellenwert liegt,
Detektieren (204), ob eine Vorrichtungskennung, die in dem drahtlosen Signal getragen wird, dieselbe ist wie diejenige einer tragbaren Vorrichtung, wenn die Stärke des drahtlosen Signals über dem Schwellenwert liegt, und
Stoppen (106, 205) der Videoüberwachung, wenn die Vorrichtungskennung dieselbe ist wie diejenige der tragbaren Vorrichtung,
nach Stoppen der Videoüberwachung, Fortsetzen des Detektierens der Stärke des empfangenen drahtlosen Signals und erneutes Ausführen der Videoüberwachung, wenn detektiert wird, dass die Stärke des drahtlosen Signals unter dem Schwellenwert liegt.

2. Verfahren nach Anspruch 1, wobei das Verfahren ferner umfasst:
Fortsetzen des Ausführens (206) einer Videoüberwachung, wenn detektiert wird, dass sich die Vorrichtungskennung von derjenigen der tragbaren Vorrichtung unterscheidet, oder
Fortsetzen des Ausführens (207) einer Videoüberwachung, wenn detektiert wird, dass die Stärke des drahtlosen Signals unter dem Schwellenwert liegt.

3. Verfahren nach einem der Ansprüche 1 bis 2, wobei das Verfahren ferner umfasst:
Herstellen (201) einer Bindungsbeziehung mit der tragbaren Vorrichtung im Voraus.

4. Verfahren nach Anspruch 3, wobei der Schritt des Herstellens (201) einer Bindungsbeziehung mit der tragbaren Vorrichtung im Voraus umfasst:
Senden (201a) einer Vorrichtungskennung einer Überwachungseinrichtung an einen Server, wobei der Server dazu ausgestaltet ist, eine Vorrichtungskennung einer tragbaren Vorrichtung nachzuschlagen, welche dasselbe Benutzerkonto wie die Überwachungseinrichtung gemäß der Vorrichtungskennung der Überwachungseinrichtung bindet,
Empfangen (201b) der Vorrichtungskennung der tragbaren Vorrichtung, die von dem Server gesendet wird, und
Speichern (201c) der Vorrichtungskennung der tragbaren Vorrichtung als die Vorrichtungskennung der tragbaren Vorrichtung.

5. Verfahren nach Anspruch 3, wobei der Schritt des Herstellens (201) einer Bindungsbeziehung mit der tragbaren Vorrichtung im Voraus umfasst:
Empfangen (201A) von Bindungsinformationen, die von einem mobilen Endgerät gesendet werden, wobei die Bindungsinformationen Vorrichtungskennungen von mindestens einer tragbaren Vorrichtung umfassen und die Bindungsinformationen von dem mobilen Endgerät gemäß einem Einrichtungsvorgang gesendet werden, der an einer Bindungsbeziehungs-Einrichtungsschnittstelle empfangen wird, und
Speichern (201B) der Vorrichtungskennung der tragbaren Vorrichtung als die Vorrichtungskennung der tragbaren Vorrichtung.

6. Videoüberwachungsvorrichtung, **dadurch gekennzeichnet, dass** die Videoüberwachungsvorrichtung umfasst:
ein Signal-Empfangsmodul (302, 402), das dazu ausgestaltet ist, ein drahtloses Signal zu empfangen, das von einer externen Vorrichtung gesendet wird,
ein Kennungs-Detektionsmodul (304, 404), das ein Schwellenwert-Detektionsteilmodul (404a) umfasst, welches dazu ausgestaltet ist, zu detektieren, ob die Stärke des drahtlosen Signals, das von dem Signal-Empfangsmodul (402) empfangen wird, über einem Schwellenwert liegt,
wobei das Kennungs-Detektionsmodul (304, 404) dazu ausgestaltet ist, zu detektieren, ob die Vorrichtungskennung, die in dem drahtlosen Signal getragen wird, das von dem Signal-Empfangsmodul (302, 402) empfangen wird, dieselbe wie diejenige einer tragbaren Vorrichtung ist, wenn das Schwellenwert-Detektionsteilmodul (404a) detektiert, dass die Stärke des drahtlosen Signals über dem Schwellenwert liegt, und
ein Überwachungs-Stoppmodul (306, 406), das dazu ausgestaltet ist, die Videoüberwachung zu stoppen, wenn das Kennungs-Detektionsmodul (304, 404) detektiert, dass die Vorrichtungskennung dieselbe ist wie diejenige der tragbaren Vorrichtung,
wobei die Videoüberwachungsvorrichtung dazu ausgestaltet ist, nach dem Stoppen der Videoüberwachung das Detektieren der Stärke des empfangenen drahtlosen Signals fortzusetzen und die Videoüberwachung erneut auszuführen, wenn das Kennungs-Detektionsmodul detektiert, dass die Stärke des drahtlosen Signals unter dem Schwellenwert liegt.

7. Vorrichtung nach Anspruch 6, wobei die Vorrichtung ferner umfasst:
ein erstes Überwachungsmodul (407), das dazu ausgestaltet ist, das Ausführen einer Videoüberwachung fortzusetzen, wenn das Kennungs-Detektionsmodul (404) detektiert, dass sich die Vorrichtungskennung von derjenigen der tragbaren Vorrichtung unterscheidet, oder
ein zweites Überwachungsmodul (408), das dazu ausgestaltet ist, das Ausführen einer Videoüberwachung fortzusetzen, wenn das Kennungs-Detektionsmodul (404) detektiert, dass die Stärke des drahtlosen Signals unter dem Schwellenwert liegt.

8. Vorrichtung nach einem der Ansprüche 6 bis 7, wobei die Vorrichtung ferner umfasst:
ein Bindungs-Herstellungsmodul (409), das dazu ausgestaltet ist, eine Bindungsbeziehung mit der tragbaren Vorrichtung im Voraus herzustellen.

9. Vorrichtung nach Anspruch 8, wobei das Bindungs-Herstellungsmodul (409) umfasst:
ein Kennungs-Sendeteilmodul (409a), das dazu ausgestaltet ist, eine Vorrichtungskennung eines Überwachungsgeräts an einen Server zu senden, wobei der Server dazu ausgestaltet ist, eine Vorrichtungskennung einer tragbaren Vorrichtung nachzuschlagen, welche dasselbe Benutzerkonto wie das Überwachungsgerät gemäß der Vorrichtungskennung des Überwachungsgeräts bindet,
ein Kennungs-Empfangsteilmodul (409b), das dazu ausgestaltet ist, die Vorrichtungskennung der tragbaren Vorrichtung zu empfangen, die von dem Server gesendet wird, und
ein erstes Speicher-Teilmodul (409c), das dazu ausgestaltet ist, die Vorrichtungskennung der tragbaren Vorrichtung, die von dem Kennungs-Empfangsteilmodul (409b) empfangen wird, als die Vorrichtungskennung der tragbaren Vorrichtung zu speichern.

10. Vorrichtung nach Anspruch 8, wobei das Bindungs-Herstellungsmodul (409) umfasst:
ein Informations-Empfangsteilmodul (409d), das dazu ausgestaltet ist, Bindungsinformationen zu empfangen, die von einem mobilen Endgerät gesendet werden, wobei die Bindungsinformationen Vorrichtungskennungen von mindestens einer tragbaren Vorrichtung umfassen und die Bindungsinformationen von dem mobilen Endgerät gemäß einem Einrichtungsvorgang gesendet werden, der an einer Bindungsbeziehungs-Einrichtungsschnittstelle empfangen wird, und
ein zweites Speicher-Teilmodul (409e), das dazu ausgestaltet ist, eine Vorrichtungskennung der tragbaren Vorrichtung, die von dem Informations-Empfangsteilmodul (409d) empfangen wird, als die Vorrichtungskennung der tragbaren Vorrichtung zu speichern.

11. Computerprogramm, das Anweisungen zum Ausführen der Schritte eines Videoüberwachungsverfahrens nach einem der Ansprüche 1 bis 5 beinhaltet, wenn das Programm von einem Computer ausgeführt wird.

12. Aufzeichnungsmedium, das von einem Computer gelesen werden kann und auf dem ein Computerprogramm aufgezeichnet ist, welches Anweisungen zum Ausführen der Schritte eines Videoüberwachungsverfahrens nach den Ansprüchen 1 bis 5 beinhaltet.

## Revendications

1. Procédé de vidéosurveillance mis en oeuvre par un équipement de surveillance, comprenant les étapes ci-dessous consistant à :
recevoir (102, 202) un signal sans fil envoyé par un dispositif externe ;
détecter (203) si l'intensité du signal sans fil est supérieure à une valeur de seuil ;
détecter (204) si une identification de dispositif transportée dans le signal sans fil est identique à celle d'un dispositif portatif, lorsque l'intensité du signal sans fil est supérieure à la valeur de seuil ; et
mettre fin (106, 205) à la vidéosurveillance si l'identification de dispositif est identique à celle du dispositif portatif ;
dès lors qu'il a été mis fin à la vidéosurveillance, poursuivre la détection de l'intensité du signal sans fil reçu, et mettre en oeuvre la vidéosurveillance à nouveau s'il est détecté que l'intensité du signal sans fil est inférieure à la valeur de seuil.

2. Procédé selon la revendication 1, dans lequel le procédé comprend en outre les étapes ci-dessous consistant à :
poursuivre la mise en oeuvre (206) d'une vidéosurveillance s'il est détecté que l'identification de dispositif est différente de celle du dispositif portatif ; ou
poursuivre la mise en oeuvre (207) d'une vidéosurveillance s'il est détecté que l'intensité du signal sans fil est inférieure à la valeur de seuil.

3. Procédé selon l'une quelconque des revendications 1 à 2, dans lequel le procédé comprend en outre l'étape ci-dessous consistant à :
établir (201) au préalable une relation de liaison avec le dispositif portatif.

4. Procédé selon la revendication 3, dans lequel l'étape consistant à établir (201) au préalable une relation de liaison avec le dispositif portatif comprend les étapes ci-dessous consistant à :
envoyer (201a) une identification de dispositif d'un équipement de surveillance à un serveur, le serveur étant configuré de manière à rechercher une identification de dispositif d'un dispositif portatif qui lie le même compte d'utilisateur que l'équipement de surveillance selon l'identification de dispositif de l'équipement de surveillance ;
recevoir (201b) l'identification de dispositif du dispositif portatif envoyée à partir du serveur ; et
stocker (201c) l'identification de dispositif du dispositif portatif en tant que l'identification de dispositif du dispositif portatif.

5. Procédé selon la revendication 3, dans lequel l'étape consistant à établir (201) au préalable une relation de liaison avec le dispositif portatif comprend les étapes ci-dessous consistant à :
recevoir (201A) des informations de liaison envoyées à partir d'un terminal mobile, les informations de liaison comprenant des identifications de dispositif d'au moins un dispositif portatif, et dans lequel les informations de liaison sont envoyées à partir du terminal mobile selon une opération de configuration reçue au niveau d'une interface de configuration de relation de liaison ; et
stocker (201B) l'identification de dispositif du dispositif portatif en tant que l'identification de dispositif du dispositif portatif.

6. Dispositif de vidéosurveillance, **caractérisé en ce que** le dispositif de vidéosurveillance comprend :
un module de réception de signal (302, 402), configuré de manière à recevoir un signal sans fil envoyé à partir d'un dispositif externe ;
un module de détection d'identification (304, 404) comprenant un sous-module de détection de valeur de seuil (404a) configuré de manière à détecter si l'intensité du signal sans fil reçu par le module de réception de signal (402) est supérieure à une valeur de seuil ;
dans lequel le module de détection d'identification (304, 404) est configuré de manière à détecter si l'identification de dispositif transportée dans le signal sans fil reçu par le module de réception de signal (302, 402) est identique à celle du dispositif portatif lorsque le sous-module de détection de valeur de seuil (404a) détecte que l'intensité du signal sans fil est supérieure à la valeur de seuil ; et
un module de surveillance d'interruption (306, 406), configuré de manière à mettre fin à la vidéosurveillance si le module de détection d'identification (304, 404) détecte que l'identification de dispositif est identique à celle du dispositif portatif ;
dans lequel le dispositif de vidéosurveillance est configuré de manière à, dès lors qu'il a été mis fin à la vidéosurveillance, poursuivre la détection de l'intensité du signal sans fil reçu, et mettre en oeuvre une vidéosurveillance à nouveau si le module de détection d'identification détecte que l'intensité du signal sans fil est inférieure à la valeur de seuil.

7. Dispositif selon la revendication 6, dans lequel le dispositif comprend en outre :
un premier module de surveillance (407), configuré de manière à poursuivre la mise en oeuvre d'une vidéosurveillance si le module de détection d'identification (404) détecte que l'identification de dispositif est différente de celle du dispositif portatif ; ou
un second module de surveillance (408), configuré de manière à poursuivre la mise en oeuvre d'une vidéosurveillance si le module de détection d'identification (404) détecte que l'intensité du signal sans fil est inférieure à la valeur de seuil.

8. Dispositif selon l'une quelconque des revendications 6 à 7, dans lequel le dispositif comprend en outre :
un module d'établissement de liaison (409), configuré de manière à établir au préalable une relation de liaison avec le dispositif portatif.

9. Dispositif selon la revendication 8, dans lequel le module d'établissement de liaison (409) comprend :
un sous-module d'envoi d'identification (409a), configuré de manière à envoyer une identification de dispositif d'un équipement de surveillance à un serveur, le serveur étant configuré de manière à rechercher une identification de dispositif d'un dispositif portatif liant le même compte d'utilisateur que l'équipement de surveillance selon l'identification de dispositif de l'équipement de surveillance ;
un sous-module de réception d'identification (409b), configuré de manière à recevoir l'identification de dispositif du dispositif portatif envoyée à partir du serveur ; et
un premier sous-module de stockage (409c), configuré de manière à stocker l'identification de dispositif du dispositif portatif, reçue par le sous-module de réception d'identification (409b), en tant que l'identification de dispositif du dispositif portatif.

10. Dispositif selon la revendication 8, dans lequel le module d'établissement de liaison (409) comprend :
un sous-module de réception d'informations (409d), configuré de manière à recevoir des informations de liaison envoyées à partir d'un terminal mobile, les informations de liaison comprenant des identifications de dispositif d'au moins un dispositif portatif, et les informations de liaison étant envoyées à partir du terminal mobile selon une opération de configuration reçue au niveau d'une interface de configuration de relation de liaison ; et
un second sous-module de stockage (409e), configuré de manière à stocker une identification de dispositif du dispositif portatif, reçue par le sous-module de réception d'informations (409d), en tant que l'identification de dispositif du dispositif portatif.

11. Programme informatique incluant des instructions pour exécuter les étapes d'un procédé de vidéosurveillance selon l'une quelconque des revendications 1 à 5, lorsque ledit programme est exécuté par un ordinateur.

12. Support d'enregistrement lisible par un ordinateur et sur lequel est enregistré un programme informatique incluant des instructions pour exécuter les étapes d'un procédé de vidéosurveillance selon les revendications 1 à 5.
